# EUROPEAN PATENT SPECIFICATION

(11) **EP 2 234 884 B1**
(45) Date of publication and mention of the grant of the patent: **08.02.2012**
(21) Application number: 08852828.6
(22) Date of filing: 17.11.2008
(51) Int. Cl.: B64D 11/06

(54) **AIRCRAFT PASSENGER SEAT**
FLUGZEUGPASSAGIERSITZ
SIÈGE DE PASSAGER D'AVION

(30) Priority: 19.11.2007 GB 0722679
(43) Date of publication of application: 06.10.2010
(73) Proprietor: British Airways PLC, Harmondsworth, West Drayton UB7 0GB (GB)
(72) Inventor: DARBYSHIRE, Martin, London SE1 4PU (GB); STEVENS, Richard, London SE11 4DS (GB)
(74) Representative: Cross, James Peter Archibald
(86) International application number: PCT/GB2008/003859
(87) International publication number: WO 2009/066054

(56) References cited:
- EP-A- 1 116 654
- WO-A-00/21831
- WO-A-03/013903
- WO-A-2007/061381
- WO-A-2007/072045
- WO-A-2007/135373
- FR-A- 2 860 194
- US-B1- 6 170 786

## Description

The present invention relates to an aircraft passenger seat, particularly but not exclusively to an aircraft sleeper seat convertible into a substantially flat bed, and to a cabin sidewall suitable for use with such a seat.

### Background to the Invention

Examples of prior art aircraft sleeper seats are disclosed in the applicant's patent publications WO-A-96/18537, WO-A-00/21831 and WO-A-07/072045, embodiments of which include the British Airways First and/or Club World seats. These seats can be converted into a flat, horizontal bed, and have enjoyed great commercial success. However, there is intense competition to provide ever-greater comfort and space for aircraft passengers.

Passenger seats for aircraft are subject to stringent design constraints, many of which are not applicable to seats for other vehicle types. One problem is the need to meet the relevant safety standards for aircraft passenger seats, such as the 16g test that requires seats to survive deceleration of 16g in a taxi, takeoff and landing (TTOL) position. Another problem is the need to minimize the weight of the seat, since carrying extra weight on an aircraft increases fuel consumption and therefore monetary and environmental cost. Hence, the seat must be both strong and light.

Another problem relates to the use of space. Any given aircraft has a maximum area for passenger seating, which must be used in the most space-efficient manner possible so as to maximize the seating area and legroom available to each passenger, while allowing unimpeded exit from the seat. It is also important for cost reasons to fit as many passenger seats as possible in the available area.

Another problem relates to the level of comfort of the seat. Aircraft passenger seats may be used for day flights, in which the passenger will want to work, eat and/or relax, and night flights during which the passenger will want to sleep. Preferably, an aircraft passenger seat should be able to adopt comfortable positions for all of these activities, yet also be able to meet the relevant safety standards in a takeoff/landing position. Another problem relates to the psychological and/or social needs of aircraft passengers, who may desire privacy while working, eating or sleeping, or may wish to interact with a travelling companion.

Patent publication WO-A-2003/013903 (Virgin Atlantic Airways) discloses an aircraft passenger seating arrangement according to the precharacterising portion of claim 1.

Patent publication EP-A-1116654 (BE Aerospace) discloses an aircraft passenger sleeper seat that can adopt fully upright, semi-reclined or lounge and fully reclined or sleep positions. The seat includes an ottoman that functions as a foot or leg support, and has a top cushion and a pivoting legrest cushion.

The applicant's earlier application PCT/GB07/001796, published as WO-A-07/135373, which forms part of the state of the art under Art. 54(3) EPC, discloses an aircraft passenger seating arrangement comprising a seat having a seat pan and a seat back, the seat being able to adopt a first, substantially upright sitting position and a second, sleeping position in which the seat back and seat pan are substantially horizontal, the arrangement further including a side surface arranged to form part of a substantially flat, horizontal sleeping surface alongside the seat. An end surface is arranged to form part of a substantially flat, horizontal sleeping surface forward of the seat. The end surface may be substantially continuous with the side surface and may be integrated therewith. The end surface may comprise a secondary seat and may be stowable. There may be provided a movable footstool stowable under the end surface.

### Statement of the Invention

According to one aspect of the present invention, there is provided an aircraft passenger seating arrangement according to claim 1.

### Brief Description of the Drawings

Embodiments of the invention will now be described with reference to the drawings identified below.
Figure 1 is a perspective view of an outboard configuration of an aircraft passenger sleeper seat according to an embodiment of the invention.
Figure 2 is a perspective view of an inboard configuration of an aircraft passenger sleeper seat according to an embodiment of the invention.
Figure 3a is a plan view of the outboard configuration.
Figure 3b is an elevation of the outboard configuration.
Figure 4a is a plan view of the inboard configuration.
Figure 4b is an elevation of the inboard configuration.
Figures 5a to 5b are schematic side views of the seat portion of either configuration respectively in TTOL, upright, reclined and bed positions.
Figure 6 is a schematic vertical cross-section of the seat portion showing an adjustable headrest.
Figure 7 is a perspective view of a footstool in the embodiment.
Figure 8a is a plan view of the seat showing two different positions of the footstool.
Figure 8b is an elevation showing the two different positions of the footstool.

### Detailed Description of the Embodiments

### Terminology

In describing the embodiments, 'horizontal' and 'vertical' are defined with reference to the floor of the passenger seating area of the aircraft. As in well known in the art, the angle of the floor relative to the gravitational horizontal is determined by the pitch of the aircraft, which is about 15° during takeoff and landing, and about 3° in level flight. When describing an individual seat, 'forward' and 'rearward' are defined with reference to the direction in which the passenger faces when seated. 'Outboard' refers to a position adjacent a cabin wall of the aircraft cabin, while 'inboard' refers to a position away from the cabin wall.

### Seating Arrangement

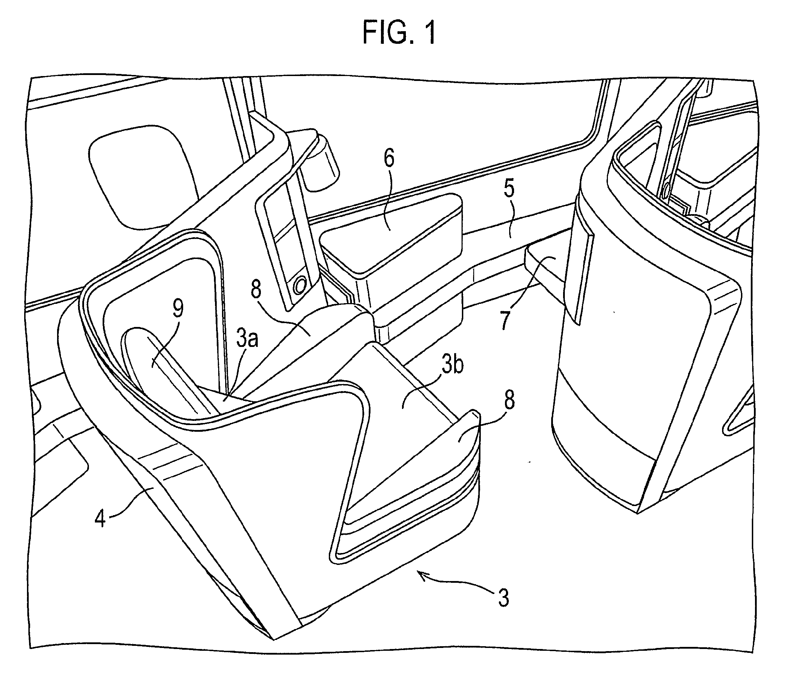

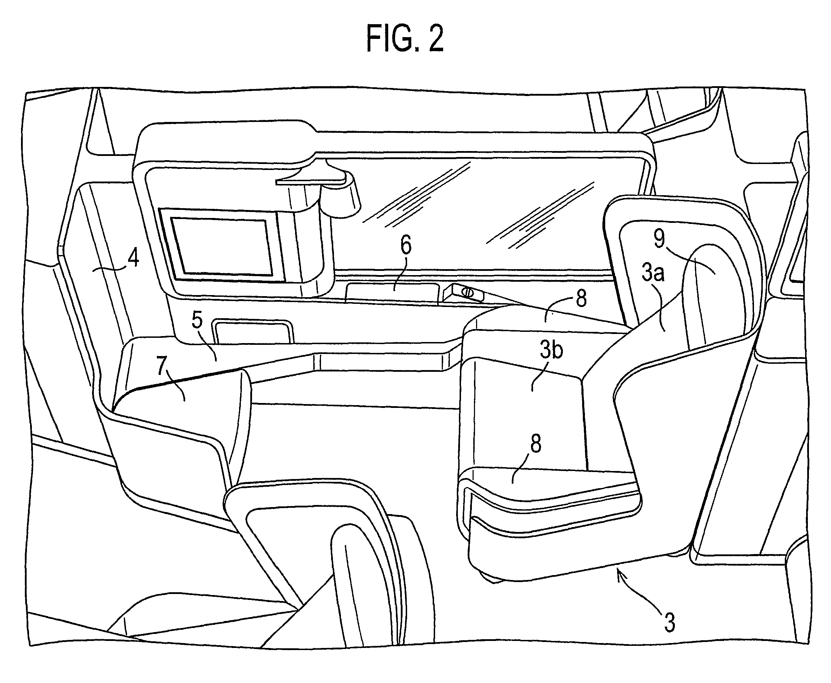

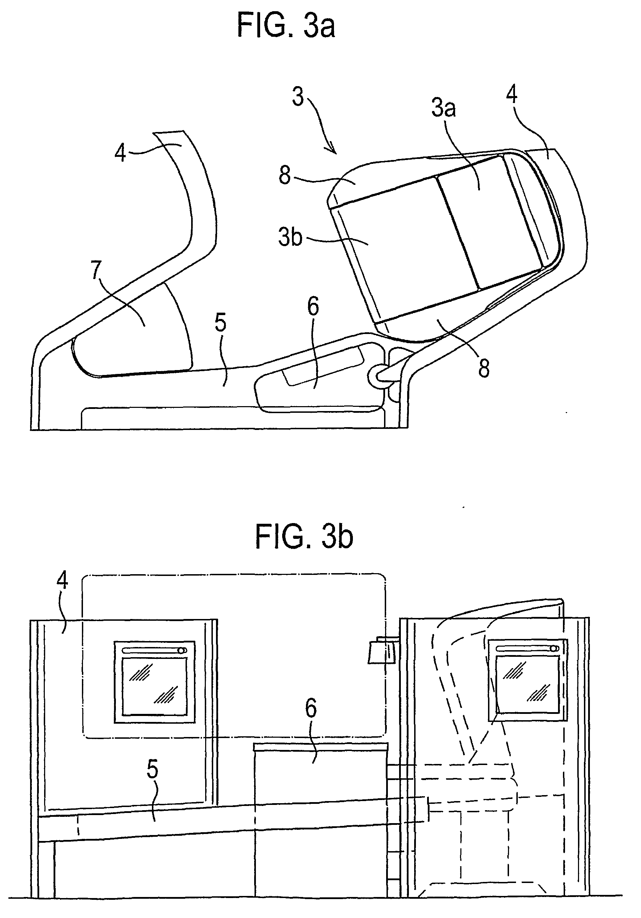

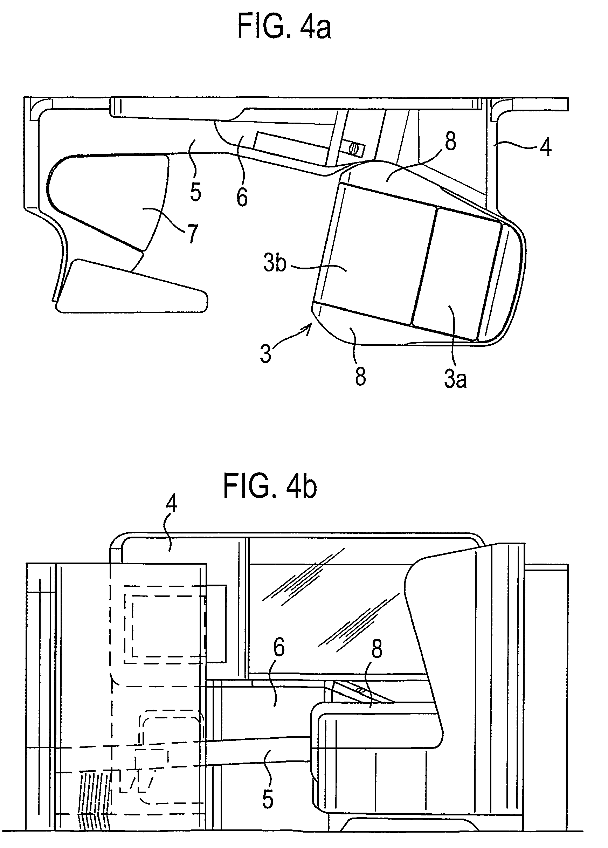

As shown in Figures 1 to 4b, an aircraft passenger seating arrangement in an embodiment of the present invention comprises the following main components: a seat 3 comprising seat back 3a and seat pan 3b, a housing or shell 4 partially surrounding the seat 3, a side surface 5 extending forward and alongside of the seat 3, a footstool 7 positioned forward of the seat and a 'credenza' or cabinet 6. The main components may be constructed as separate components and installed together in an aircraft to form the seating arrangement. Not all of the main components are essential to all aspects of the present invention.

An armrest 8 is provided at either side of the seat pan 3b. One or both of the armrests 8 may be lowered or retracted so that they are substantially level with, and preferably continuous with the side surface 5. The side surface 5 is preferably fixed with respect to the floor, and its height is not adjustable by the passenger. A headrest portion of the seat back 3a comprises a moveable headrest 9, as described in detail below.

The cabinet 6 is positioned to one side of the seat 3, adjacent the side surface 5. The cabinet 6 may house one or more passenger facilities, such as a stowable table, a light, controls for reclining the seat 3 and/or operating an in-flight entertainment (IFE) system. The cabinet 6 has a top surface for use as an occasional table or cocktail tray.

The shell 4 extends behind and to at least one side, and preferably to both sides of the seat 3. For inboard seats, the shell 4 includes a privacy screen; for example, it may conceal the seated passenger, at least partially, from surrounding seated passengers. Preferably, the seat back 3a remains substantially within the shell 4 as it reclines; for example, the seat back 3a does not project significantly, or at all, above the shell. Preferably, the shell 4 conceals and/or hinders passenger access to a reclining mechanism for the seat 3. The shell 4 may also provide passenger storage and/or facilities, such as an IFE screen stowable flush with the shell 4.

### Seat Reclining Positions

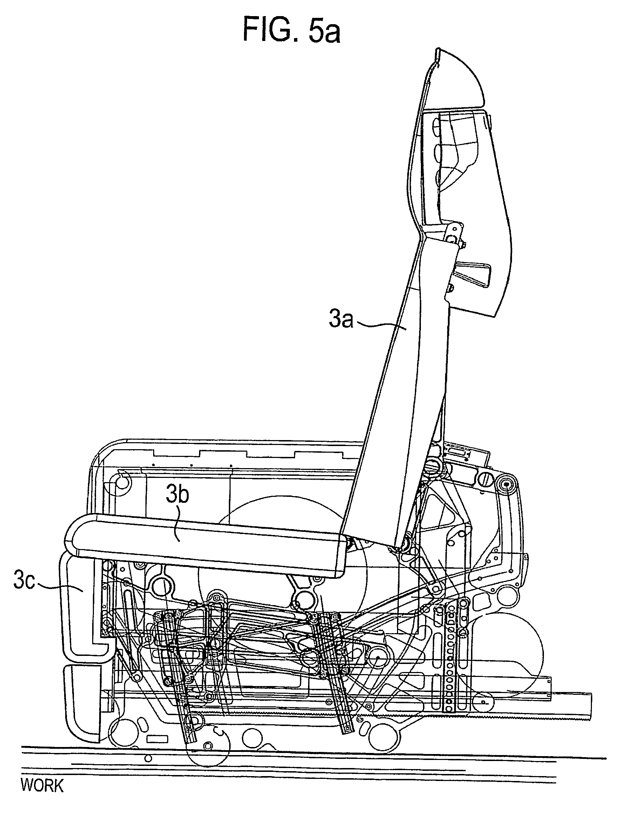

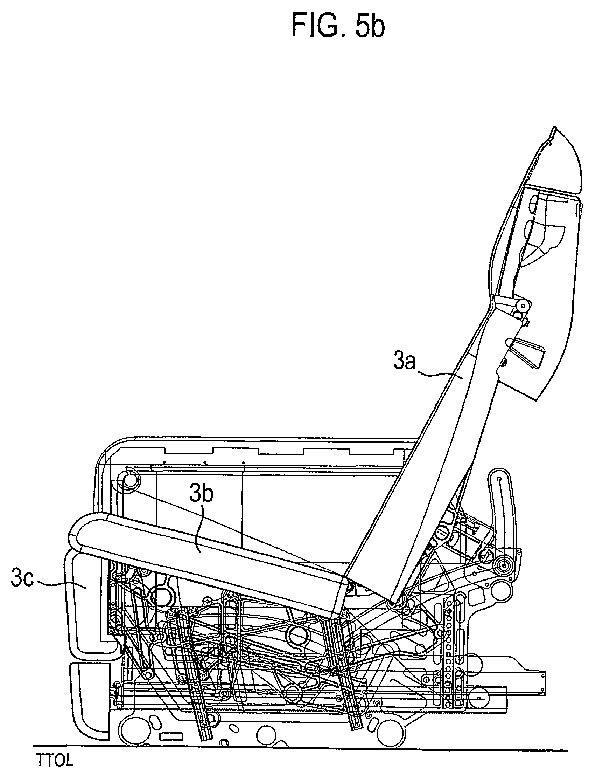

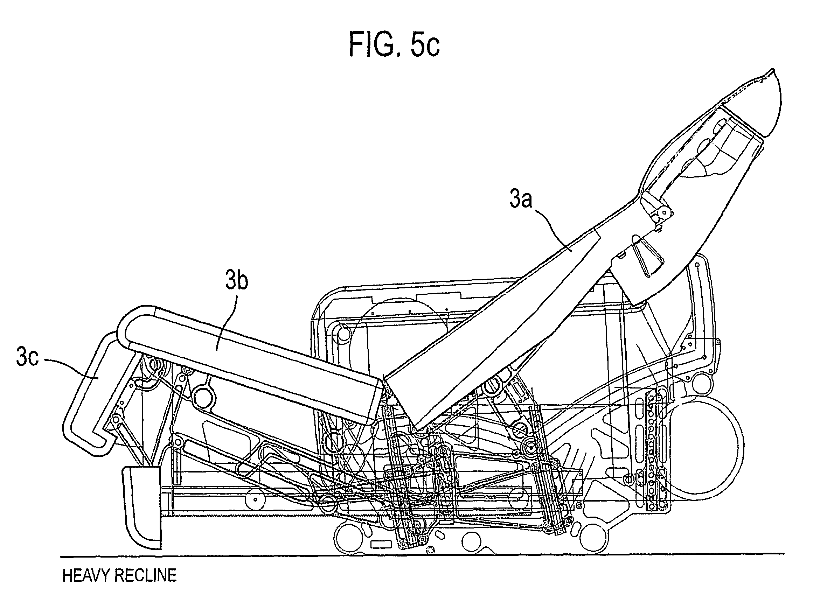

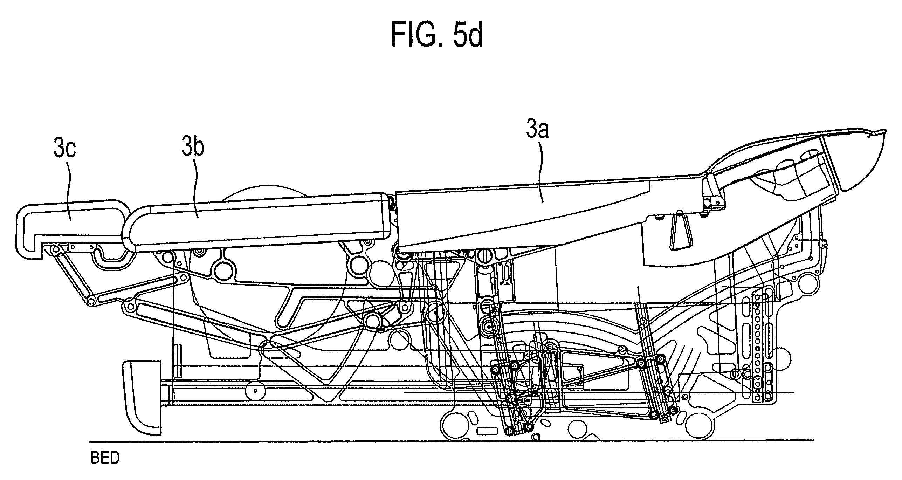

The seating arrangement includes a seat reclining mechanism which allows the seat 3 to be positioned in at least a sitting and a sleeping position, and preferably in each of the following four positions, as shown in Figures 5a to 5d:
a) upright sitting position: the seat back 3a is fully upright, at 10-20° to the vertical (13° in this example), and the seat pan is tilted rearwardly by 2-10° (4° in this example) to provide a comfortable position for working or eating.
b) taxi, takeoff and landing (TTOL) position: the seat back 3a is slightly reclined, at 20-30° to the vertical (28° in this example), and the seat pan 3b is tilted rearward by 10-20° (15° in this example), to provide a secure and comfortable position. Preferably, the seat 3 meets the 16g test criteria in this position.
c) reclined position: the seat back 3a is reclined, at 30-70° to the vertical (56° in this example), and the seat pan 3b is tilted rearward by 10-20° (17° in this example), to provide a comfortable position for resting and using IFE.
d) Bed position: the seat back 3a and seat pan 3b are substantially horizontal, at 0-10° to the horizontal (3° in this example so as to be gravitationally horizontal in level flight), and form a substantially continuous and/or flat surface suitable for sleeping on.

An auxiliary surface 3c is pivotally attached to the forward end of the seat pan 3b. In positions a) and b), the auxiliary surface 3c is stowed under the seat pan 3b, and is preferably substantially vertical. In position c), the auxiliary surface 3c is driven by the seat reclining mechanism to an intermediate position at an angle of approximately 30° to the vertical. In position d), the auxiliary surface 3c is driven by the seat reclining mechanism to a substantially horizontal position, so that the seat back 3a, seat pan 3b, auxiliary surface 3c and footstool 7 form a substantially flat, horizontal and continuous sleeping surface. In position d), the side surface 5 is substantially coplanar and/or continuous with the seat pan 3b and auxiliary surface 3c so as to form a sleeping surface that is wider than the seat pan 3b. One or both of the armrests 8 may be driven by the seat mechanism to retract in position d), so as to form a flat continuous surface with the seat back 3a and/or the side surface 5.

Hence, the seat arrangement may provide a sleeping surface that is considerably wider than the seat pan along the majority of the length of the sleeping surface. Moreover, the major axis of the sleeping surface is in the longitudinal direction of the seat 3, so the passenger need not greatly adjust his or her orientation when moving to the sleeping position d) from another position. The side surface is elongate, with a major axis substantially parallel to the longitudinal direction of the seat 3, so that it does not greatly increase the overall width of the seating arrangement.

Preferably, the seat reclining mechanism and/or controls enable the seat 3 to be reclined continuously between the positions a) to d) and maintained in any of those positions or in intermediate positions therebetween. Alternatively, the seat reclining mechanism and/or controls may restrict the positions in which the seat 3 may be maintained. However, it is preferable that a continuous transition between at least positions b) and c) is possible.

As can be seen from Figures 5a to 5d, the seat mechanism is operable to lift the seat pan 3b to a substantially horizontal position level with the side surface 5 as the seat approaches the sleeping position d). Specific mechanisms for achieving combined pivoting and lifting of seat pans are known *per se* in the art.

The seat mechanism further acts to drive the auxiliary surface 3c from its stowed position in seat positions a) to c) to its substantially horizontal position in seat position d). Mechanisms for driving legrests pivotally attached to seat pans are known *per se* in the art and may be used to drive the auxiliary surface 3c, with suitable modifications.

### Headrest

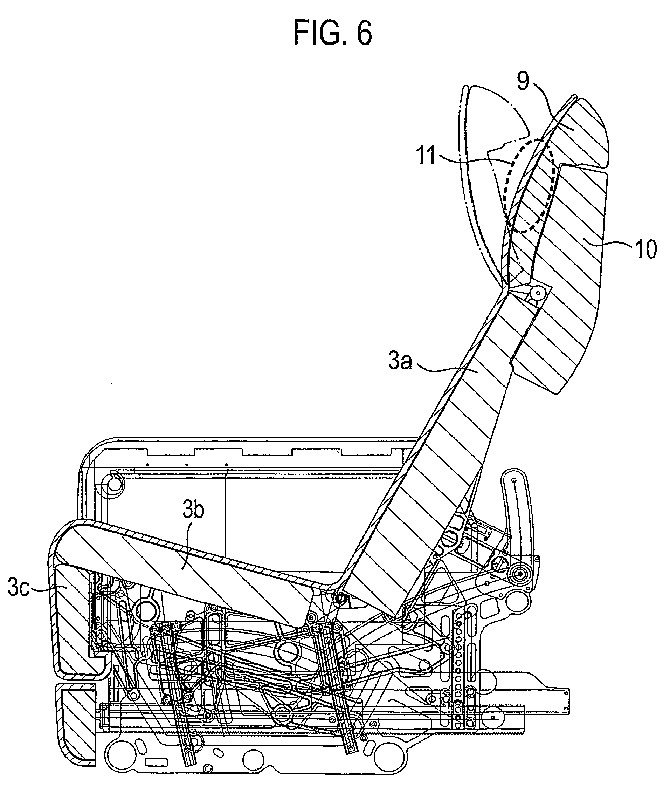

As shown in Figure 6, the headrest 9 is pivotable forward relative to the seat back 3a so as to give additional support to the passenger's head. The pivoting axis is substantially horizontal and is provided at or around the lower edge of the headrest. The angle of pivot is adjustable by the passenger, up to a maximum angle which may be 30° or more. pivoting the headrest 9 about its lower edge provides a comfortable support position for the user's head, particularly when the seat back 3a is in the reclined or bed position.

The pivoting of the headrest 9 is driven by an inflatable chamber 11 located between the pivotable headrest 9 and a headrest support 10, the latter being fixed relative to the seat back 3a. The inflatable chamber 11 is inflated by an air pump controlled by the passenger. As the inflatable chamber 11 inflates, it applies pressure between the headrest support 10 and the headrest, thus pivoting the headrest 9 forwards. Air may also be released from the inflatable chamber 11, under the control of the passenger. This provides a convenient mechanism for controlling to angle of the headrest 9, since the pump may be concealed in the space under the seat 3, and may be connected to the inflatable chamber 11 by a tube. Also, the headrest 9 provides firmer support than would be provided if the passenger's head were to rest directly against the inflatable chamber 11 or the inflatable chamber 11 were to be covered with flexible material.

The pivoting of the headrest 9 may be coupled to the reclining of the seat 3, such that the headrest 9 adopts a horizontal position when the seat 3 is in the bed position. This may be achieved by an automatic coupling between the reclining mechanism and the air pump and/or the inflatable chamber 11, such that air is released automatically from the chamber 11 when the seat 3 is at or close to the bed position.

### Footstool

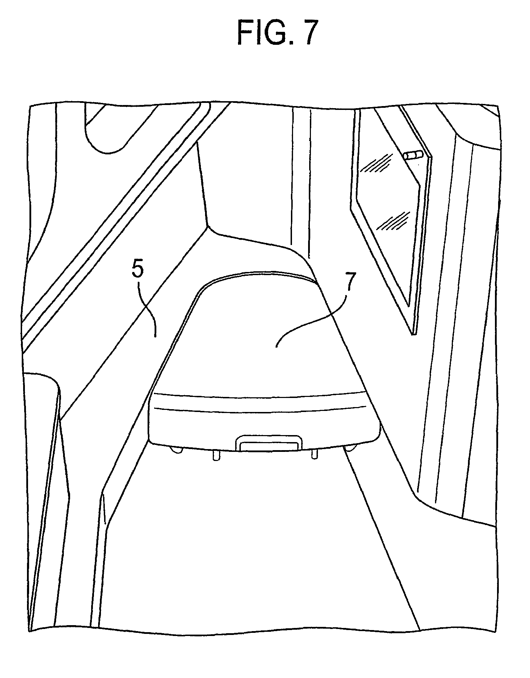

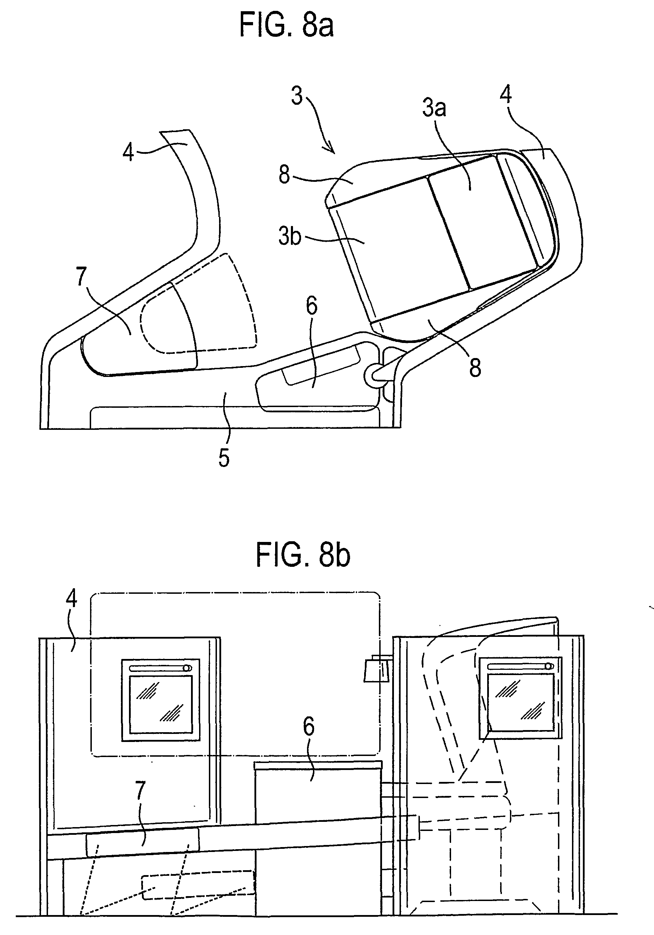

As shown in Figures 8a and 8b, the footstool 7 is moveable between a footstool position, which is low and positioned towards the seat 3, and a bed-end position which is high, positioned away from the seat 3 and substantially flush with the side surface 5 as shown particularly in Figure 7. The mechanism for moving the footstool 7 between the footstool position and the bed-end position may comprise a parallelogram linkage, as indicated by dotted lines in Figure 8b. Preferably, the footstool 7 may be locked in at least the bed-end position, from which it is releasable by a passenger-actuated latch.

In the bed-end position, the footstool 7 may be used as a 'buddy seat' i.e. a secondary seat facing the seat 3, allowing a companion to sit opposite the occupant of the seat 3 when in position a) or b). When the seat 3 is in position d), the footstool 7 forms an end portion of the bed, thus extending the length of the bed provided by the seat 3, while the side surface 5 extends the width of the end of the bed. Hence, a substantially flat and continuous horizontal bed surface is provided by the seat back 3a, seat pan 3b, armrests 8, side surface 5, auxiliary surface 3c and footstool 7.

In the footstool position, the footstool 7 is positioned so as to conveniently provide a rest for the passenger's feet.

### Alternative Embodiments

Alternative embodiments of the invention may be apparent from reading the above description. Such alternative embodiments may nevertheless fall within the scope of the present invention.

## Claims

1. An aircraft passenger seating arrangement comprising a seat (3) having a seat pan (3b) and a seat back (3a), the seat (3) being able to adopt a first, substantially upright sitting position and a second, sleeping position in which the seat back (3a) and seat pan (3b) are substantially horizontal, the arrangement further including a side surface (5) arranged to form part of a substantially flat, horizontal sleeping surface substantially alongside the seat in the sleeping position, and an end surface (7); **characterised in that** the end surface (7) is moveable between a first position, in which the end surface (7) is adjacent the side surface (5), to form part of the substantially flat, horizontal sleeping surface forward of the seat, and a second position to serve as a footstool when the seat (3) is in the sitting position.

2. The arrangement of claim 1, wherein the end surface (7) in the first position is higher and further forward of the seat than in the second position.

3. The arrangement of claim 1 or 2, wherein, in the first position, the end surface (7) is substantially flush with the side surface (5).

4. The arrangement of any preceding claim, wherein the seat (3) includes an auxiliary surface (3c) positionable between the seat pan (3b) and the end surface (7) in the sleeping position.

5. The arrangement of claim 4, wherein the auxiliary surface (3c) is connected to the seat pan (3b).

6. The arrangement of claim 4 or claim 5, wherein the auxiliary surface (3c) is movable between a stowed configuration in the sitting position and a deployed configuration in the sleeping position.

7. The arrangement of any one of claims 1 to 6, wherein the end surface (7) comprises a secondary seat.

8. The arrangement of any one of claims 1 to 7, wherein the end surface (7) is releasably lockable in said first position.

9. The arrangement of any preceding claim, wherein the seat (3) includes at least one armrest (8) arranged to form part of the sleeping surface when the seat (3) is in the sleeping position.

10. The arrangement of claim 9, wherein the armrest (8) is movable between a raised position above the seat pan (3b) in the first position, and a lowered position so as to form part of the sleeping surface when the seat (3) is in the sleeping position.

11. The arrangement of any preceding claim, wherein the side surface (5) is positioned substantially alongside the seat pan in the sleeping position.

12. The arrangement of any preceding claim, wherein the side surface (5) is elongate substantially in the longitudinal direction of the seat (3).

13. The arrangement of any preceding claim, wherein the seat (3) is able to adopt a third, reclining position in which the seat back is reclined to a position intermediate that of the first and second positions, and the seat pan is more inclined than in the first position.

14. An aircraft cabin having a cabin seating arrangement according to any preceding claim.

15. An aircraft having a cabin according to claim 14.

## Patentansprüche

1. Flugzeug-Passagiersitzanordnung, die einen Sitz (3) umfasst, der eine Sitzschale (3b) und eine Sitzlehne (3a) hat, wobei der Sitz (3) dazu in der Lage ist, eine erste, im Wesentlichen aufrechte, Sitzstellung und eine zweite, Schlafstellung, in der die Sitzlehne (3a) und die Sitzschale (3b) im Wesentlichen horizontal sind, einzunehmen, wobei die Anordnung ferner eine Seitenfläche (5), die dafür angeordnet ist, einen Teil einer im Wesentlichen ebenen, horizontalen Schlagfläche im Wesentlichen längsseits des Sitzes in der Schlafstellung zu bilden, und eine Stirnfläche (7) einschließt, **dadurch gekennzeichnet, dass** die Stirnfläche (7) zwischen einer ersten Stellung bewegt werden kann, in der die Stirnfläche (7) der Seitenfläche (5) benachbart ist, um vor dem Sitz einen Teil der im Wesentlichen ebenen, horizontalen Schlaffläche zu bilden, und einer zweiten Stellung, um als eine Fußstütze zu dienen, wenn sich der Sitz (3) in der Sitzstellung befindet.

2. Anordnung nach Anspruch 1, wobei sich die Stirnfläche (7) in der ersten Stellung höher und weiter vor dem Sitz befindet als in der zweiten Stellung.

3. Anordnung nach Anspruch 1 oder 2, wobei, in der ersten Stellung, die stirnfläche (7) im Wesentlichen bündig mit der Seitenfläche (5) ist.

4. Anordnung nach einem der vorhergehenden Ansprüche, wobei der Sitz (3) eine Zusatzfläche (3c) einschließt, die in der Schlagstellung zwischen der Sitzschale (3b) und der Stirnfläche (7) angeordnet werden kann.

5. Anordnung nach Anspruch 4, wobei die Zusatzfläche (3c) mit der Sitzschale (3b) verbunden ist.

6. Anordnung nach Anspruch 4 oder Anspruch 5, wobei die Zusatzfläche (3c) zwischen einer verstauten Konfiguration in der Sitzstellung und einer entfalteten Konfiguration in der Schlafstellung bewegt werden kann.

7. Anordnung nach einem der Ansprüche 1 bis 6, wobei die Stirnfläche (7) einen Zweitsitz umfasst.

8. Anordnung nach einem der Ansprüche 1 bis 7, wobei die Stirnfläche (7) lösbar in der ersten Stellung arretiert werden kann.

9. Anordnung nach einem der vorhergehenden Ansprüche, wobei der Sitz (3) wenigstens eine Armlehne (8) einschließt, die dafür angeordnet ist, einen Teil der Schlaffläche zu bilden, wenn sich der Sitz (3) in der Schlafstellung befindet.

10. Anordnung nach Anspruch 9, wobei die Armlehne (8) zwischen einer erhöhten Stellung über der Sitzschale (3b) in der ersten Stellung und einer abgesenkten Stellung bewegt werden kann, um so einen Teil der Schlaffläche zu bilden, wenn sich der Sitz (3) in der Schlafstellung befindet.

11. Anordnung nach einem der vorhergehenden Ansprüche, wobei die Seitenfläche (5) in der Schlafstellung im Wesentlichen längsseits der Sitzschale angeordnet ist.

12. Anordnung nach einem der vorhergehenden Ansprüche, wobei die Seitenfläche (5) im Wesentlichen in der Längsrichtung des Sitzes (3) länglich ist.

13. Anordnung nach einem der vorhergehenden Ansprüche, wobei der Sitz (3) dazu in der Lage ist, eine dritte, Zurücklehnstellung einzunehmen, in der die Sitzlehne bis zu einer Stellung zwischen derjenigen der ersten und der zweiten Stellung zurückgelehnt ist und die Sitzschale mehr geneigt ist als in der ersten Stellung.

14. Flugzeugkabine, die eine Kabinen-Bestuhlungsanordnung nach einem der vorhergehenden Ansprüche umfasst.

15. Flugzeug, das eine Kabine nach Anspruch 14 hat.

## Revendications

1. Dispositif formant siège de passager d'avion, comprenant un siège (3) avec une assise (3b) et un dossier (3a), le siège (3) étant apte à adopter une première position de siège, globalement verticale, et une deuxième position de couchage dans laquelle le dossier (3a) et l'assise (3b) sont globalement horizontaux, le dispositif comprenant par ailleurs une surface latérale (5) qui est conçue pour faire partie d'une surface de couchage horizontale globalement plate, globalement le long du siège en position de couchage, et une surface d'extrémité (7) ; **caractérisé en ce que** la surface d'extrémité (7) est mobile entre une première position dans laquelle elle est voisine de la surface latérale (5) afin de faire partie de la surface de couchage horizontale globalement plate, à l'avant du siège, et une deuxième position afin de servir de repose-pieds quand le siège (3) est en position de siège.

2. Dispositif de la revendication 1, étant précisé que dans la première position, la surface d'extrémité (7) se trouve plus haut et plus en avant du siège que dans la deuxième position.

3. Dispositif de la revendication 1 ou 2, étant précisé que dans la première position, la surface d'extrémité (7) se trouve globalement au même niveau que la surface latérale (5).

4. Dispositif de l'une quelconque des revendications précédentes, étant précisé que le siège (3) comprend une surface auxiliaire (3c) apte à être positionnée entre l'assise (3b) et la surface d'extrémité (7) en position de couchage.

5. Dispositif de la revendication 4, étant précisé que la surface auxiliaire (3c) est reliée à l'assise (3b).

6. Dispositif de la revendication 4 ou 5, étant précisé que la surface auxiliaire (3c) est mobile entre une configuration repliée, en position de siège, et une configuration déployée, en position de couchage.

7. Dispositif de l'une quelconque des revendications 1 à 6, étant précisé que la surface d'extrémité (7) comprend un siège secondaire.

8. Dispositif de l'une quelconque des revendications 1 à 7, étant précisé que la surface d'extrémité (7) est apte à être verrouillée de manière amovible dans la première position.

9. Dispositif de l'une quelconque des revendications précédentes, étant précisé que le siège (3) comprend au moins un accoudoir (8) conçu pour faire partie de la surface de couchage quand le siège (3) est en position de couchage.

10. Dispositif de la revendication 9, étant précisé que l'accoudoir (8) est mobile entre une position relevée au-dessus de l'assise (3b), dans la première position, et une position abaissée de manière à faire partie de la surface de couchage quand le siège (3) est en position de couchage.

11. Dispositif de l'une quelconque des revendications précédentes, étant précisé que la surface latérale (5) est positionnée globalement le long de l'assise, en position de couchage.

12. Dispositif de l'une quelconque des revendications précédentes, étant précisé que la surface latérale (5) a une forme allongée globalement dans le sens longitudinal du siège (3).

13. Dispositif de l'une quelconque des revendications précédentes, étant précisé que le siège (3) est apte à adopter une troisième position réglable dans laquelle le dossier est réglable dans une position intermédiaire entre les première et deuxième positions, et l'assise est plus inclinée que dans la première position.

14. Cabine d'avion pourvue d'un dispositif formant siège de cabine selon l'une des revendications précédentes.

15. Avion pourvu d'une cabine selon la revendication 14.
